# EUROPEAN PATENT SPECIFICATION

(11) **EP 2 444 259 B1**
(45) Date of publication and mention of the grant of the patent: **20.08.2014**
(21) Application number: 11185908.8
(22) Date of filing: 20.10.2011
(51) Int. Cl.: B60C 15/00, B60C 19/00, B60C 15/06

(54) **Reduced weight tire**
Reifen mit reduziertem Gewicht
Pneu à poids réduit

(30) Priority: 22.10.2010 US 910161
(43) Date of publication of application: 25.04.2012
(73) Proprietor: The Goodyear Tire & Rubber Company, Akron, OH 44316-0001 (US)
(72) Inventor: Ueyoko, Kiyoshi, Copley, OH 44321 (US); Das, Badal, Strongsville, OH 44136 (US)
(74) Representative: Kutsch, Bernd

(56) References cited:
- EP-A1- 1 452 346
- EP-A2- 2 055 508
- JP-A- 2 018 104

## Description

### Field of the Invention

This invention relates to a pneumatic tire having a reduced weight carcass and, preferably, to high speed heavy load tires such as those used on aircraft.

### Background of the Invention

The radial carcass reinforcements of aircraft tires or other heavy load tires generally comprise several plies of textile cords, which are anchored in each bead to at least one annular bead member generally formed having a single continuously wound bead wire. The reinforcing elements of these reinforcements are wound around said annular bead member from the inside to the outside, forming turn-ups, the respective ends of which are spaced radially from the axis of rotation of the tire. The severe conditions under which airplane tires are used are such that the life of the beads is short, particularly in the area of the turn-ups of the carcass reinforcement.

A substantial improvement in performance is obtained by the separating the carcass plies into two groups. The first group comprises the plies of the carcass reinforcement which are axially towards the inside in the region of the beads, these plies being then wound around a annular bead member in each bead from the inside to the outside of the tire. The second group is formed of at least one axially outer ply in the region of the beads, which ply is generally wound around the annular bead member from the outside to the inside of the tire.

The areas directly inward of the annular bead member and axially outward are respectively called the bead base and the bead flange areas. These areas are in direct contact with the rim and accordingly a tough durable rubber compound commonly referred to as a chafer is used in this area. The particular area of the tire located directly between the annular bead member and the rim bead seat experience very high loads. The use of round annular bead members and radial plies create a rocking action under taxiing and straight line driving on takeoffs that can cause the chafer to crack.

It is an object of the present invention to provide a lightweight efficient tire structure having superb durability and not prone to bead chafer cracks. It is a further object of the present invention to provide an improved bead structure wherein the use of inside turn-up plies and outside turndown plies is optimized. Thus, an improved tire usable for aircraft is needed, which is capable of meeting high speed, high load and with reduced weight.

EP-A-1 452 346 describes an aircraft tire in accordance with the preamble of claim 1.

A similar aircraft tire is also described in EP-A-2 055 508.

### Summary of the Invention

The invention relates to a tire in accordance with claim 1.

Dependent claims refer to preferred embodiments of the invention.

### Definitions

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Ply" means a continuous layer of rubber-coated preferably parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Zigzag belt reinforcing structure" means at least two layers of cords or a ribbon of parallel cords preferably having 1 to 20 cords in each ribbon and laid up in an alternating pattern extending at an angle between 5 ° and 30 ° between lateral edges of the belt layers.

### Brief Description of the Drawings

The invention will be described by way of example and with reference to the accompanying drawings in which:
FIG. 1 is a schematic cross-sectional view of a first tire which is not according to the invention but which is useful to understand the invention; and

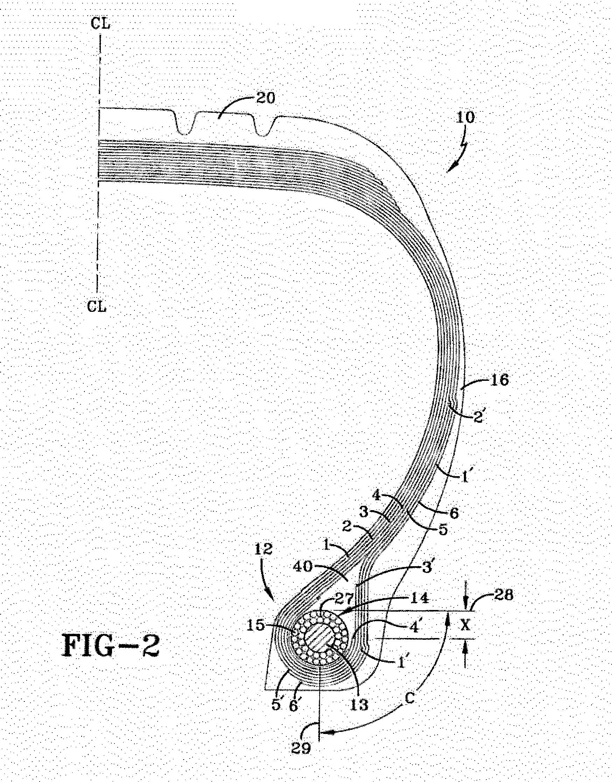

FIG. 2 is a second bead area of a tire, which is not according to the invention but which is useful to understand the invention.

### Detailed Description of the Invention

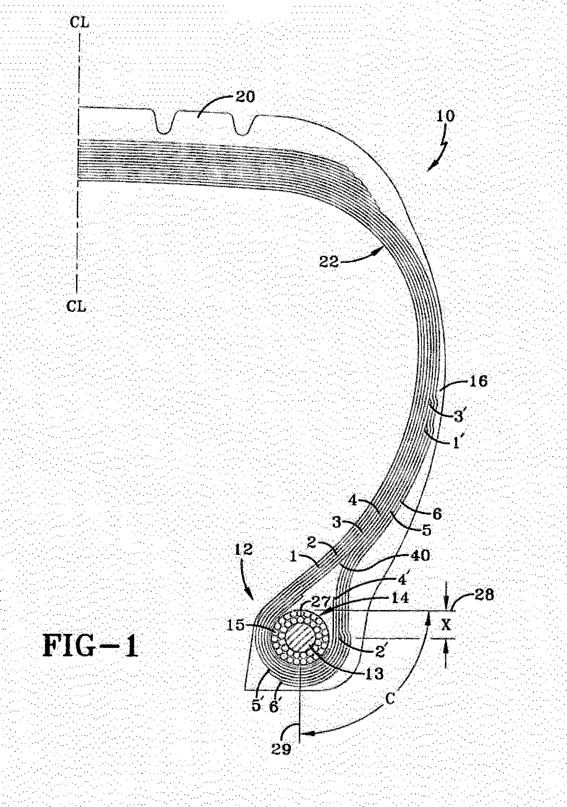

FIG. 1 illustrates a cross-sectional view of one half of a tire 10 such as a radial aircraft tire 10. The tire is preferably symmetrical about the mid-circumferential plane so that only one half is illustrated. As shown, the aircraft tire comprises a pair of bead portions 12 each containing an annular bead member 14 (or bead core) embedded therein. One example of an annular bead member suitable for use in an aircraft tire is shown in US-B- 6,571,847. The annular bead member 14 preferably has an aluminum, aluminum alloy or other light weight alloy in the center portion 13 surrounded by a plurality of steel sheath wires 15. A person skilled in the art may appreciate that other annular bead members may also be utilized. Radially outward of the bead is an apex 40.

The tire 10 further comprises a sidewall portion 16 extending substantially outward from each of the bead portions 12 in the radial direction of the tire, and a tread portion 20 extending between the radially outer ends of the sidewall portions 16. Furthermore, the tire 10 is reinforced with a carcass 22 toroidally extending from one of the bead portions 12 to the other bead portion 12. The carcass 22 comprises an innerliner and at least two inner carcass plies 1, 2, 3, 4 and at least two outer carcass plies 5, 6, preferably oriented in the radial direction. Among these carcass plies, typically four inner plies 1, 2, 3, 4 extend radially inward from the crown towards the bead area 12. The inner plies 1, 2 ,3 ,4 are wound around the annular bead member 14 from axially inside of the annular bead member toward axially outside thereof and extend radially outward towards the crown to form respective turnup portions 1', 2', 3', 4'. At least one of the plies, e.g., 1, has a terminal end 1' which is located within a zone denoted as "C." Zone C is defined by a first plane 28 that is tangent to the outer radial surface of the annular bead member at its radially outermost point 27, and wherein the first plane 28 is parallel to the tire axis of rotation. Zone C is further defined by a second plane 29 that extends through the center point of the annular bead member and wherein the second plane 29 is perpendicular to the first plane or axial direction (i.e., axis of rotation of the tire). Zone C is further defined by the intersection of the first plane 28 and the second plane 29 and the quadrant that is axially outward of the second plane 29 and radially inward of the first plane 28.

Preferably, the terminal end 1' of the innermost ply 1 or of at least one of the inner plies 1, 2, 3, 4 is located within Zone C and at a radial distance X from the first plane 28 in the range of from 1 mm to 10 mm and more preferably in the range of from 1 mm to 5 mm. Two of the inner plies may have a terminal end located within Zone C. However no more than 50% of the total inner plies may have a terminal end located within Zone C. It is preferred that at least two of the innermost plies have a terminal end which are radially outward of the apex.

The carcass further comprises at least two outer plies 5, 6 which extend radially inward from the crown and are axially outward of the annular bead member 14 along the outside of the turnup portion of the inner carcass plies 24. The two outer carcass plies 5, 6 extend down from the crown and further extend axially outward and are wrapped around the bead terminating in endings 5', 6', respectively. Preferably, one of the endings 5', 6' overlap with the one or more inner plies which has a terminal end having a radial location in Zone C. Preferably, two of the endings 5', 6' overlap with the one or more inner plies which has a terminal end in Zone C.

Each of these carcass plies 1-6 may comprise any suitable cord, typically nylon cords such as nylon-6,6 cords extending substantially perpendicular to an equatorial plane EP of the tire (i.e., extending in the radial direction of the tire). Preferably the nylon cords have an 1890 denier/2 or 1890 denier/3 construction. One or more of the carcass plies may also comprise an aramid and nylon cord structure, for example, a hybrid cord, a high energy cord or a merged cord. The carcass ply may also be polyketone. Examples of suitable cords are described in US-B- 4,893,665, US-B- 4,155,394 or US-B- 6,799,618.

The aircraft tire 10 preferably further comprises a belt package arranged between the carcass 22 and the tread rubber 20. The belt package as shown comprises a first belt layer located adjacent the carcass. The first belt layer is preferably formed of cords having an angle of 5 degrees or less with respect to the mid-circumferential plane. Preferably, the first belt layer is formed of a rubberized strip of two or more cords made by spirally or helically winding the cords at an angle of plus or minus 5 degrees or less relative to the circumferential direction. The first belt layer is the narrowest belt structure of the belt package, and has a width in the range of 13% to 100% of the rim width (width between flanges).

The belt package preferably further comprises a second belt layer located radially outward of the first belt layer. The second belt layer is preferably formed of cords having an angle of 5 degrees or less with respect to the mid-circumferential plane. Preferably, the second belt layer is formed of a rubberized strip of two or more cords made by spirally or helically winding the cords at an angle of plus or minus 5 degrees or less relative to the circumferential direction. The second belt layer preferably has a width in the range of 101 % to 120% of the rim width, and has a width greater than the first belt layer. More preferably, the second belt layer is the widest belt layer of the belt package.

The belt package may further comprise at least one zigzag belt reinforcing structure. The zigzag belt reinforcing structure comprises two layers of cord interwoven together. It is preferred that the zigzag belt structure is the most radially outward belt structure of the belt package. It is also preferred that there is only one zigzag belt structure. The zigzag belt structure is preferably wider than the first belt structure, and more preferably is wider than the first belt structure but has a width less than the second belt structure.

In any of the above described embodiments, the cords are preferably continuously wound from one belt structure to the next.

The cords of any of the above described carcass, spiral or zigzag belt layers described above may be nylon, nylon 6,6, aramid, or combinations thereof, including merged, hybrid, high energy constructions known to those skilled in the art. One example of a suitable cord construction for the belt cords, carcass cords (or both), may comprise a composite of aramid and nylon, containing two cords of a polyamide (aramid) with construction of 3300 dtex with a 6.7 twist, and one nylon or nylon 6/6 cord having a construction of 1880 dtex, with a 4.5 twist. The overall merged cable twist is 6.7. The composite cords may have an elongation at break greater than 11 % and a tensile strength greater than 900 Newtons. Optionally, the original linear density may be greater than 8500 dtex. Elongation, break, linear density and tensile strength are determined from cord samples taken after being dipped but prior to vulcanization of the tire.

## Claims

1. A pneumatic tire having a carcass (22) comprising at least two inner plies (1, 2, 3, 4) of which at least one is wound about an annular bead member (14) from axially inside of the annular bead member (14) toward axially outside thereof and extends radially outward towards a tread portion (20) of the tire (10) forming a respective turnup portion (1', 3', 4'), wherein at least one of the inner plies (2) has a terminal end (2') which has a radial location in a first zone (C) defined by a first plane (28) and a second plane (29), wherein the first plane (28) is tangent to the outer radial surface of the annular bead member (14) and parallel to the axis of rotation of the tire (10), wherein the second plane (29) is perpendicular to the first plane (28) and extends through the center of the annular bead member (14), and wherein the first zone (C) is located radially inward of the first plane (28) and axially outward of the second plane (29), wherein the carcass (22) further comprises at least two outer plies (5, 6) which extend axially outward of the annular bead member (14), and wherein the outer carcass plies (5, 6) each have a ply ending (5', 6') wherein a ply ending of one of the outer carcass plies (5, 6) has a radial location in a second zone defined by the first plane (28) and the second plane (29) wherein the second zone is located radially inward of the first plane (28) and axially inward of the second plane (29), **characterized in that**
(i) a ply ending of an other of the outer carcass plies (5, 6) has a radial location in the first zone (C), and/or
(ii) an other of the outer carcass plies (5, 6) is wound about the annular bead member (14) and has a ply ending at a radial location radially above the first plane (28).

2. The tire of claim 1 wherein at least one or a plurality of the outer carcass plies (5, 6) is/are wound about the annular bead member (14).

3. The tire of at least one of the previous claims wherein only one of the inner plies (2) has a terminal end (2') having a radial location in the first zone (C) and
(i) the other inner plies (1, 3, 4) have respective terminal ends (1', 3', 4') at radial locations radially above the first plane (28), and/or
(ii) the other inner plies (1, 3, 4) are wound about the annular bead member (14).

4. The tire of at least one of the previous claims wherein at least one of the outer carcass plies (5, 6) has a ply ending (5', 6') that overlaps with the terminal end (1', 2', 3', 4') of at least one of the inner carcass plies (1, 2, 3, 4) in the first zone (C).

5. The tire of at least one of the previous claims wherein the axially outermost inner ply (4) has a terminal end (4') located the first zone (C), and/or wherein the axially innermost inner ply (1) has a terminal end (1') located in the first zone (C).

6. The tire of claim 1 or 6 wherein the axially outermost inner ply (4) does not wrap about the annular bead member (14) or at least not fully wrap about the annular bead member (14), and/or wherein the axially innermost ply (1) does not wrap about the annular bead member (14) or at least not fully wrap about the annular bead member (14).

7. The tire of at least one of the previous claims wherein at least one of the inner plies (4) has a terminal end (4') located radially between the first plane (28) and a radially outer tip of a bead apex (40).

8. The tire of at least one of the previous claims wherein the tire (10) comprises four or at least four inner plies (1, 2, 3, 4) and two or at least two outer plies (5, 6).

9. The tire of claim 1 or 8 wherein no more than 50% of the inner plies (1, 2, 3, 4) do not wrap about the annular bead member (14) or at least not fully about the annular bead member (14), and/or wherein no more than 50% of the inner plies (1, 2, 3, 4) have a terminal end located in the first zone (C).

10. The tire of at least one of the previous claims wherein carcass (22) is a radial carcass comprising carcass ply cord fibers made from at least one of aramid, polyketone, nylon or a nylon and aramid blend.

11. The tire of at least one of the previous claims wherein the tire (10) further comprises a belt reinforcing structure.

12. The tire of at least one of the previous claims wherein the tire (10) is an aircraft tire such as a radial aircraft tire.

## Patentansprüche

1. Luftreifen mit einer Karkasse (22), umfassend mindestens zwei innere Lagen (1, 2, 3, 4), wovon mindestens eine um ein ringförmiges Wulstelement (14) von axial einwärts von dem ringförmigen Wulstelement (14) zu axial auswärts davon herumgewickelt ist und sich radial auswärts zu einem Laufflächenteil (20) des Reifens (10) erstreckt, wobei sie ein jeweiliges Umschlagteil (1', 3', 4') bildet, wobei mindestens eine der inneren Lagen (2) ein Ende (2') aufweist, das einen radialen Standort in einer durch eine erste Ebene (28) und eine zweite Ebene (29) definierten ersten Zone (C) hat, wobei die erste Ebene (28) Tangente zu der äußeren radialen Oberfläche des ringförmigen Wulstelements (14) und parallel zur Rotationsachse des Reifens (10) ist, wobei die zweite Ebene (29) senkrecht zu der ersten Ebene (28) ist und sich durch das Zentrum des ringförmigen Wulstelements (14) erstreckt, und wobei die erste Zone (C) sich radial einwärts von der ersten Ebene (28) und axial auswärts von der zweiten Ebene (29) befindet, wobei die Karkasse (22) weiter mindestens zwei äußere Lagen (5, 6) umfasst, die sich axial auswärts von dem ringförmigen Wulstelement (14) erstrecken, und wobei die äußeren Karkassenlagen (5, 6) jede ein Lagenende (5', 6') aufweisen, wobei ein Lagenende einer der äußeren Karkassenlagen (5, 6) einen radialen Standort in einer durch die erste Ebene (28) und die zweite Ebene (29) definierten zweiten Zone hat, wobei die zweite Zone sich radial einwärts von der ersten Ebene (28) und axial einwärts von der zweiten Ebene (29) befindet, **dadurch gekennzeichnet, dass**
(i) ein Lagenende einer anderen der äußeren Karkassenlagen (5, 6) einen radialen Standort in der ersten Zone (C) hat, und/oder
(ii) eine andere der äußeren Karkassenlagen (5, 6) um das ringförmige Wulstelement (14) herumgewickelt ist und ein Lagenende an einem radialen Standort radial über der ersten Ebene (28) aufweist.

2. Reifen nach Anspruch 1, wobei mindestens eine oder mehrere der äußeren Karkassenlagen (5, 6) um das ringförmige Wulstelement (14) herumgewickelt ist bzw. sind.

3. Reifen nach mindestens einem der vorgenannten Ansprüche, wobei nur eine der inneren Lagen (2) ein Ende (2') aufweist, das einen radialen Standort in der ersten Zone (C) hat, und
(i) die anderen inneren Lagen (1, 3, 4) jeweilige Enden (1', 3', 4') an radialen Standorten radial über der ersten Ebene (28) aufweisen, und/oder
(ii) die anderen inneren Lagen (1, 3, 4) um das ringförmige Wulstelement (14) herumgewickelt sind.

4. Reifen nach mindestens einem der vorgenannten Ansprüche, wobei mindestens eine der äußeren Karkassenlagen (5, 6) ein Lagenende (5', 6') aufweist, das sich mit dem Ende (1', 2', 3', 4') von mindestens einer der inneren Karkassenlagen (1, 2, 3, 4) in der ersten Zone (C) überlappt.

5. Reifen nach mindestens einem der vorgenannten Ansprüche, wobei die axial äußerste innere Lage (4) ein Ende (4') aufweist, das sich in der ersten Zone (C) befindet, und/oder wobei die axial innerste innere Lage (1) ein Ende (1') aufweist, das sich in der ersten Zone (C) befindet.

6. Reifen nach Anspruch 1 oder 6, wobei die axial äußerste innere Lage (4) nicht um das ringförmige Wulstelement (14) herumgeschlagen oder mindestens nicht vollständig um das ringförmige Wulstelement (14) herumgeschlagen ist, und/oder wobei die axial innerste Lage (1) nicht um das ringförmige Wulstelement (14) herumgeschlagen oder mindestens nicht vollständig um das ringförmige Wulstelement (14) herumgeschlagen ist.

7. Reifen nach mindestens einem der vorgenannten Ansprüche, wobei mindestens eine der inneren Lagen (4) ein radial zwischen der ersten Ebene (28) und einer radial äußeren Spitze eines Wulstkernprofils (40) befindliches Ende (4') aufweist.

8. Reifen nach mindestens einem der vorgenannten Ansprüche, wobei der Reifen (10) vier oder mindestens vier innere Lagen (1, 2, 3, 4) und zwei oder mindestens zwei äußere Lagen (5, 6) aufweist

9. Reifen nach Anspruch 1 oder 8, wobei nicht mehr als 50% der inneren Lagen (1, 2, 3, 4) nicht um das ringförmige Wulstelement (14) oder mindestens nicht vollständig um das ringförmige Wulstelement (14) herumgeschlagen sind, und/oder wobei nicht mehr als 50% der inneren Lagen (1, 2, 3, 4) ein Ende aufweisen, das sich in der ersten Zone (C) befindet.

10. Reifen nach mindestens einem der vorgenannten Ansprüche, wobei die Karkasse (22) eine Radialkarkasse ist, die Karkassenlagen-Kordfasern umfasst, die aus mindestens einem von Aramid, Polyketon, Nylon oder einem Nylon- und Aramidgemisch hergestellt sind.

11. Reifen nach mindestens einem der vorgenannten Ansprüche, wobei der Reifen (10) weiter eine Gürtelverstärkungsstruktur umfasst.

12. Reifen nach mindestens einem der vorgenannten Ansprüche, wobei der Reifen (10) ein Flugzeugreifen, wie etwa ein Flugzeug-Radialreifen, ist.

## Revendications

1. Bandage pneumatique possédant une carcasse (22) comprenant au moins deux nappes internes (1, 2, 3, 4) dont au moins une vient s'enrouler autour d'un membre annulaire (14) faisant office de talon depuis l'intérieur en direction axiale du membre annulaire (14) faisant office de talon jusqu'à l'extérieur de ce dernier en direction axiale, et s'étend en direction radiale vers l'extérieur dans la direction d'une portion (20) faisant office de bande de roulement du bandage pneumatique (10) en formant une portion respective de retournement vers le haut (1', 3', 4'), dans lequel au moins une des nappes internes (2) possède une extrémité terminale (2') contenant un endroit radial dans une première zone (C) qui est définie par un premier plan (28) et par un deuxième plan (29), dans lequel le premier plan (28) est tangent à la surface radial externe du membre annulaire faisant office de talon (14) et est parallèle à l'axe de rotation du bandage pneumatique (10), dans lequel le deuxième plan (29) est perpendiculaire au premier plan (28) et s'étend en passant par le centre du membre annulaire (14) faisant office de talon, et dans lequel la première zone (C) est disposée en direction radiale à l'intérieur du premier plan (28) et en direction axiale à l'extérieur du deuxième plan (29), dans lequel la carcasse (22) comprend en outre au moins deux nappes externes (5, 6) qui s'étendent en direction axiale à l'extérieur du membre annulaire (14) faisant office de talon, et dans lequel les nappes de carcasse externes (5, 6) possèdent chacune une extrémité de nappe (5', 6'), une extrémité de nappe d'une des nappes externes (5, 6) contenant un endroit radial dans une deuxième zone qui est définie par le premier plan (28) et par le deuxième plan (29), la deuxième zone étant disposée en direction radiale à l'intérieur du premier plan (28) et en direction axiale à l'intérieur du deuxième plan (29), **caractérisé en ce que**:
(i) une extrémité de nappe de l'autre des nappes de carcasse externes (5, 6) contient un endroit radial dans la première zone (C) ; et/ou
(ii) l'autre des nappes de carcasse externes (5, 6) vient s'enrouler autour du membre annulaire (14) faisant office de talon et possède une extrémité de nappe à un endroit radial en direction radiale au-dessus du premier plan (28).

2. Bandage pneumatique selon la revendication 1, dans lequel au moins une des nappes de carcasse externes (5, 6) ou plusieurs petites nappes vient/viennent s'enrouler autour du membre annulaire (14) faisant office de talon.

3. Bandage pneumatique selon au moins une des revendications précédentes, dans lequel seulement une des nappes internes (2) possède une extrémité terminale (2') contenant un endroit radial dans la première zone (C) et
(i) les autres nappes internes (1, 3, 4) possèdent des extrémités terminales respectives (1', 3', 4') à des endroits radiaux en direction radiale au-dessus du premier plan (28) ; et/ou
(ii) les autres nappes internes (1, 3, 4) viennent s'enrouler autour du membre annulaire (14) faisant office de talon.

4. Bandage pneumatique selon au moins une des revendications précédentes, dans lequel au moins une des nappes de carcasse externes (5, 6) possède une extrémité de nappe (5', 6') qui chevauche l'extrémité terminale (1', 2', 3', 4') d'au moins une des nappes de carcasse internes (1, 2, 3, 4) dans la première zone (C).

5. Bandage pneumatique selon au moins une des revendications précédentes, dans lequel la nappe interne (4) la plus externe en direction axiale possède une extrémité terminale (4') disposée dans la première zone (C), et/ou dans lequel la nappe interne (1) la plus interne en direction axiale possède une extrémité terminale (1') disposée dans la première zone (C).

6. Bandage pneumatique selon la revendication 1 ou 5, dans lequel la nappe interne (4) la plus externe en direction axiale ne vient pas s'enrouler autour du membre annulaire (14) faisant office de talon ou à tout le moins ne vient pas s'enrouler complètement autour du membre annulaire (14) faisant office de talon, et/ou dans lequel la nappe interne (1) la plus interne en direction axiale ne vient pas s'enrouler autour du membre annulaire (14) faisant office de talon ou à tout le moins ne vient pas s'enrouler complètement autour du membre annulaire (14) faisant office de talon.

7. Bandage pneumatique selon au moins une des revendications précédentes, dans lequel au moins une des nappes internes (4) possède une extrémité terminale (4) qui est disposée en direction radiale entre le premier plan (28) et une extrémité externe en direction radiale d'un bourrage sur tringle (40).

8. Bandage pneumatique selon au moins une des revendications précédentes, dans lequel le bandage pneumatique (10) comprend quatre ou au moins quatre nappes internes (1, 2, 3, 4) et deux ou au moins deux nappes externes (5, 6).

9. Bandage pneumatique selon la revendication 1 à 8, dans lequel pas plus de 50 % des nappes internes (1, 2, 3, 4) ne viennent pas s'enrouler autour du membre annulaire (14) faisant office de talon ou à tout le moins pas complètement autour du membre annulaire (14) faisant office de talon et/ou dans lequel pas plus de 50 % des internes nappes internes (1, 2, 3, 4) possèdent une extrémité terminale disposée dans la première zone (C).

10. Bandage pneumatique selon au moins une des revendications précédentes, dans lequel la carcasse (22) est une carcasse radiale comprenant des fibres de câblés de nappe de carcasse constituées par au moins un membre choisi parmi l'aramide, une polycétone, le nylon et un mélange de nylon et d'aramide.

11. Bandage pneumatique selon au moins une des revendications précédentes, dans lequel le bandage pneumatique (10) comprend en outre une structure de renforcement de ceinture.

12. Bandage pneumatique selon au moins une des revendications précédentes, dans lequel le bandage pneumatique (10) est un bandage pneumatique pour aéroplane tel qu'un bandage pneumatique à nappe radiale pour aéroplane.
